# EUROPEAN PATENT SPECIFICATION

(11) **EP 3 317 548 B1**
(45) Date of publication and mention of the grant of the patent: **26.08.2020**
(21) Application number: 16732977.0
(22) Date of filing: 13.06.2016
(51) Int. Cl.: F16B 5/02, F16B 37/02

(54) **SCREW CONNECTION**
SCHRAUBVERBINDUNG
RACCORD À VIS

(30) Priority: 02.07.2015 EP 15174955
(43) Date of publication of application: 09.05.2018
(73) Proprietor: Electrolux Appliances Aktiebolag, 105 45 Stockholm (SE)
(72) Inventor: KRÄMER, Daniel, 91541 Rothenburg (DE); KRANZ, Willi, 91541 Rothenburg ob der Tauber (DE); DEIB, Hans, 91541 Rothenburg ob der Tauber (DE)
(74) Representative: Electrolux Group Patents
(86) International application number: PCT/EP2016/063533
(87) International publication number: WO 2017/001181

(56) References cited:
- DE-A1- 3 622 001
- DE-A1-102013 212 038
- DE-C1- 3 934 589
- GB-A- 2 067 700
- US-A1- 2014 271 030

## Description

Generally, the present invention relates to the field of screw connections. More specifically, the present invention relates to a screw connection being adapted to provide a reliable connection between a thin metal sheet and a structural element.

### BACKGROUND OF THE INVENTION

Household or kitchen appliances, e.g. baking ovens, dish washers, washing machines etc. are known in prior art. Recent developments tend to reduce the thickness of metal sheets in order to save resources and reduce the weight of the household or kitchen appliances.

When reducing the thickness of the metal sheet to be fixed at the structural element by means of a screw connection, the problem occurs that the screw head may get very close to the screw hole. Due to the fact that the end portion of the thread typically runs out towards the screw head, there is the risk that the thread end portion below the screw head interacts with the screw hole, leading to a weak screw connection.

Document DE 39 34 589 Cl discloses a screw connection. A thinwalled first component is fixed at a second component made of plastic based on a screw.

### SUMMARY OF THE INVENTION

It is an objective of the embodiments of the invention to provide a screw connection which ensures a reliable connection of a sheet metal with a structural element even at reduced sheet metal thicknesses. The objective is solved by the features of the independent claim. Preferred embodiments are given in the dependent claims. If not explicitly indicated otherwise, embodiments of the invention can be freely combined with each other.

According to an aspect of the invention, the invention relates to a screw connection. The screw connection comprises a structural element including a screw hole. The structural element may be, for example, a frame element of any other element. According to embodiments, the structural element may be constituted by a metal sheet. In addition, the screw connection comprises a metal sheet to be fixed at said structural element. The metal sheet comprises a through hole. The structural element and the metal sheet are adapted to be connected by means of a screw. Said screw is screwed through the through hole of the metal sheet into the screw hole of the structural element. Thereby, the screw passes the through hole without any engagement of the thread in the side wall limiting the through hole in radial direction. Furthermore, the metal sheet comprises an embossment. Said embossment at least partially surrounds the through hole in order to increase the distance between an upper surface of the metal sheet and the screw hole provided in the structural element in the area of the screw connection.

Using said embossing in the area of the through hole, a gap between the screw head and the screw hole is obtained, said gap avoiding that the end portion of the thread directly below the screw head interacts with the screw hole. Thereby, a resilient screw connection is obtained.

According to embodiments, the embossment is obtained by partial metal forming or deep drawing of the metal sheet. Thereby, a simple and cost-effective manufacturing of the metal sheet comprising the embossing is possible.

According to embodiments, the embossment comprises a support portion, the support portion at least partially resting at the structural element and at least partially radially confining the through hole. Preferably, the support portion can be constituted by a portion of the metal sheet that protrudes downwardly and that comprises a free end that is oriented to abut essentially perpendicularly on the structural element. Still preferably, the downwardly protruding support portion with the free end protrudes from the upper portion forming the contact surface for the screw head towards the structural element. Thereby, the free end of the support portion that rests perpendicularly on the structural element provides asupport of the upper portion of the embossment with a high stiffness. As a result, the upper portion comprises a high structural strength when applying a fastening torque to the screw and a deformation of said upper portion is avoided.

According to embodiments, the support portion is formed by a ring-shaped rim. Said ring-shaped rim may confine the through-hole in radial direction. Furthermore, the ring-shaped rim may border a cavity provided in the embossment towards the through hole. Due to the ring-shaped rim, a uniform support of the upper portion of the embossment is obtained.

According to embodiments, the embossment comprises an upper portion comprising a contact surface, the screw head of the screw being adapted to rest against said contact surface. Due to said resting of the screw head on the contact surface, and the gap between the metal sheet and the structural element, a distancing of the screw head from the screw hole provided within the structural element is obtained.

According to embodiments, the support portion protrudes from the upper portion downwardly towards the structural element. Preferably, the support portion is arranged in parallel to the longitudinal direction of the screw. Thereby, a reliable support of the upper portion in case of applying a fastening torque on the screw is obtained.

According to embodiments, the embossing comprises an annular, cup-like shape. In other words, the embossing may comprise an annular recess which is arranged around the through hole and which comprises an opening facing the structural element. Said annular recess may be confined in radial direction by the support portion and a connection portion. Said support portion may border the annular recess towards the through hole, whereas the connection portion provides a radial outer border of the annular recess. The connection portion may couple the embossment with the remaining portion of the metal sheet.

According to embodiments, the metal sheet comprises a wall thickness below 0.5mm. For example, the wall thickness may be 0.2mm, 0.25mm, 0.3mm, 0.35mm, 0.4mm or 0.45 or any intermediate value between said wall thickness values.

According to embodiments, the structural element is at least partially formed by a metal sheet. For example, the structural element may be a frame made of metal sheet material.

According to embodiments, the screw is a self-tapping screw. Self-tapping screws often comprise a thread which tails off in direct proximity of the screw head. So in case of using self-tapping screws, the usage of an embossment is preferred.

According to a further aspect, the invention refers to a household or kitchen appliance comprising a screw connection according to anyone of the preceding embodiments.

The terms "essentially", "substantially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: shows an example schematic sectional view of a screw connection;
- Fig. 2: shows an example schematic view of a baking oven; and
- Fig. 3: shows an enlarged detail view of figure 2.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

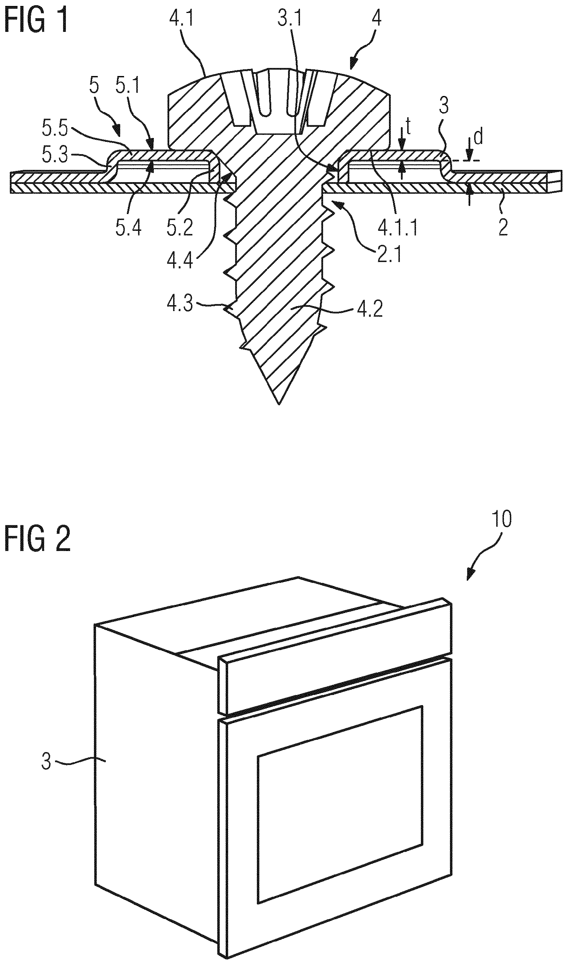

Fig. 1 illustrates an example embodiment of a screw connection 1. The screw connection 1 comprises a structural element 2 and a metal sheet 3. The structural element 2 may be, for example, a metal sheet, too. In the following, the structural element 2 is referred to as first metal sheet 2 and the metal sheet 3 is referred to as second metal sheet 3. Said first and second metal sheets 2, 3 may form part of complex components of kitchen or household appliances. For example, the first metal sheet 2 may be, for example, a part of a household appliance, e.g. a metal cladding element, a frame element or a structural unit of a household appliance or the like. The second metal sheet 3 may be, for example, a housing element of the kitchen or household appliance or any other component, which has to be fixed to the first metal sheet 2 based on a screw connection 1.

The first metal sheet 2 comprises a screw hole 2.1 for receiving a thread portion 4.2 of a screw 4. For example, the screw 4 may be a self-tapping screw, i.e. before screwing the screw 4 into the screw hole 2.1 for the first time, there is no thread provided in the screw hole 2.1.

Especially in case that the second metal sheet 3 is made of a thin metal sheet, e.g. with a thickness t lower than 0.5mm, the problem occurs that the strength of the screw connection 1 decreases because - due to the low thickness of the second metal sheet 3 - there is only a low distance between the screw hole 2.1 and the screw head 4.1.

In order obtain a high-strength screw connection 1, the second metal sheet 3 comprises an embossment 5. The embossment 5 may be obtained by a partial metal forming, e.g. by deep drawing or the like. By means of the embossment 5, the distance d between the first metal sheet 2 and the second metal sheet 3 in the area of the screw hole 2.1 is increased. Thereby the risk that the thread run-out directly below the screw head 4.1 interacts with the screw hole 2.1 is reduced.

As shown in Fig. 1, a through hole 3.1 is provided through the second metal sheet 3, said through hole 3.1 being arranged in the area of the embossment 5. Preferably, the through hole 3.1 is provided in the centre of the embossment 5.

According to embodiments, the embossment 5 may be formed by two or more protrusions surrounding the through hole 3.1. Preferably, the embossment 5 may be formed by a single ring-shaped protrusion encompassing the through hole 3.1. The diameter of the through hole 3.1 is dimensioned such that the thread 4.3 of the screw 4 does not engage in the side wall limiting the through hole 3.1. For example, the diameter of the through hole 3.1 may be significantly greater than the diameter of the screw hole 2.1 (e.g. at least 30%, 40% or 50% greater) in order to ensure that a conical portion 4.4 of the screw 4 being arranged at the lower side of the screw head 4.1, said conical portion 4.4 providing a transition portion between the screw head 4.1 and the thread portion 4.2, is received within the through hole 3.1.

In the following, the embossment 5 provided at the second metal sheet 3 is described in closer detail. The embossment 5 is obtained by deforming the second metal sheet 3 around the through hole 3.1 such that a three-dimensional shaping of a metal portion of the second metal sheet 3 is obtained. Due to said three-dimensional shaping, one or more protrusions are obtained which form a contact surface 5.1 which interacts with a planar, lower surface 4.1.1 of the screw head 4.1. In other words, after screwing the screw 4 through the through hole 3.1 into the screw hole 2.1, the lower surface 4.1.1 of the screw head 4.1 rests against the contact surface 5.1.

The contact surface 5.1 is provided at an upper portion 5.5 of the embossment 5. Said upper portion 5.5 may be, for example, arranged in parallel to the first metal sheet portion in which the screw hole 2.1 is provided. Said upper portion 5.5 constituting the contact surface 5.1 may be coupled with the portion of the second metal sheet 3 surrounding the embossment 5 by means of one or more connection portions 5.3. Said connection portion 5.3 may protrude upwardly from the second metal sheet portion surrounding the embossment 5 thereby leading to a gap between the lower surface 5.4 of the embossment 5 and the first metal sheet 2. Said connection portion 5.3 may be arranged at a certain distance to the through hole 3.1, e.g. a distance which is equal or greater than the screw hole 2.1.

Furthermore, the embossment 5 comprises a support portion 5.2. Said support portion 5.2 protrudes from the upper portion 5.5 downwardly towards the first metal sheet 2. Preferably, the end face of the support portion 5.2 may rest against the upper side of the first metal sheet 2. Thereby, the support portion 5.2 forms a prop or reinforcement element which supports the upper portion 5.5 thereby avoiding a deformation of the embossment 5 in case of tightening the screw 4. As a result, the fastening torque of the screw 4 might be increased.

As shown in Fig. 1, the support portion 5.2 protrudes upwardly from the first metal sheet 2. Preferably, the support portion 5.2 vertically protrudes from the first metal sheet 2. Thereby, the support portion 5.2 forms a wall portion which confines the through hole 3.1 in radial direction.

Preferably, the embossment 5 is formed in one piece at the second metal sheet 3, e.g. by deforming the metal sheet. The embossment 5 may be, for example, a ring-shaped cup surrounding the through hole 3.1 wherein the opening of the ring-shaped cup opens towards the first metal sheet 2. Alternatively, there may be a plurality of embossments 5 provided around the through hole 3.1, said embossments 5 providing contact surfaces 5.1 for the lower surface 4.1.1 of the screw head in order to enable a distancing of the screw head 4.1 from the screw hole 2.1.

Fig. 2 shows a schematic diagram of a household or kitchen appliance 10, according to the present embodiment constituted by a baking oven. The baking oven may comprise one or more metal plates which are fixed at a structural element of the oven by means of upper-mentioned screw connection 1. According to other embodiments, the household or kitchen appliance 10 may be a dish washer, a washing machine, a dryer or the like.

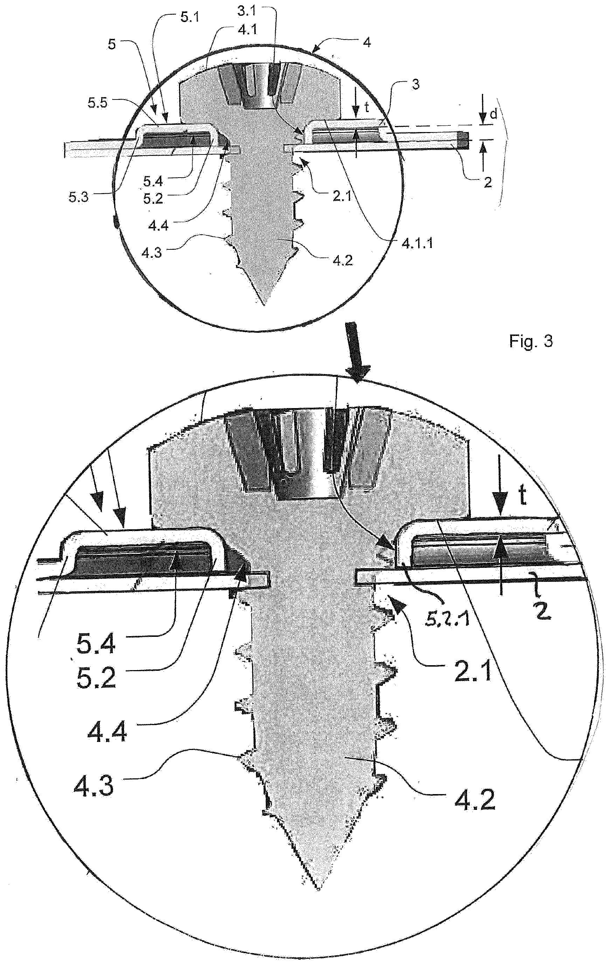

Fig. 3 shows in enlarged detail of Fig. 2 the support portion 5.2 which protrudes downwardly from the upper portion 5.5 towards the structural element 2. The support portion 5.2 has a free end 5.2.1 which is oriented to abut essentially perpendicularly on the structural element 2. Due to said perpendicular orientation of its free end 5.2.1, the support portion 5.2 is axially stressed by the screw 4 and has thus a high stiffness that resists the force applied by the screw and effectively avoids that the screw flattens the support portion 5.2, thereby ensuring a screw connection that has a considerably enforced strength.

As shown in Fig. 1 and 3, the embossment 5 is integrally formed at the second metal sheet 3. More in detail, starting from a portion of the second metal sheet 3 which directly abuts against the first metal sheet 2 (left and right lateral zones of Fig. 1 and 3), the connection portion 5.3 protrudes upwardly from said first metal sheet 2, specifically, the connection portion 5.3 protrudes vertically from the first metal sheet 2. The connection portion 5.3 may have a length such that the distance d between the first metal sheet 2 and the second metal sheet 3 is at least twice the thickness t of the first metal sheet 2. In other words, the support portion 5.2 may have a length (measured in the axial direction of the screw 4) at least twice the thickness t of the first metal sheet 2.

At the upper portion of the connection portion 5.3 distanced from the first metal sheet 2, the upper portion 5.5 protrudes laterally from said connection portion 5.3. Said upper portion 5.5 may protrude such that the first metal sheet 2 and the upper portion 5.5 are parallel to each other. The support portion 5.2 may protrude from the upper portion 5.5 downwardly towards the first metal sheet 2 wherein the free end 5.2.1 of the support portion 5.2 rests against the upper side of the first metal sheet 2. Preferably, the support portion 5.2 protrudes vertically from the upper portion 5.5 and the support portion 5.2 runs perpendicular to the first metal sheet 2.

As mentioned before, the embossment 5 may be an annular or ring-shaped embossment running around the screw hole 2.1. Alternatively, multiple embossments 5 may be arranged around the screw hole 2.1. The embossment 5 may have a U-shaped cross section with the support portion 5.2 and the connection portion 5.3 being the legs and the upper portion 5.5 being the bottom of said U-shaped embossment.

Said embossment 5 is advantageous because the distance between the lower surface 4.1.1 of the screw head 4.1 and the first sheet metal 2 comprising the screw hole 2.1 can be significantly increased. However, the embossment 5 comprises a high stiffness because the support portion 5.2 forms a bracing element between the upper portion 5.5 and the first metal sheet 2 thereby allowing a higher torque applied to the screw 4 which clearly enhances the stability of the screw connection.

Above, embodiments of a screw connection according to the present invention as defined in the appended claims have been described. These should be seen as merely non-limiting examples.

As understood by a skilled person, many modifications and alternative embodiments are possible within the scope of the invention.

### List of reference numerals

- 1: screw connection
- 2: structural element
- 2.1: screw hole
- 3: metal sheet
- 3.1: through hole
- 4: screw
- 4.1: screw head
- 4.1.1: lower surface
- 4.2: thread portion
- 4.3: thread
- 4.4: conical portion
- 5: embossment
- 5.1: contact surface
- 5.2: support portion
- 5.2.1: free end of support portion
- 5.3: connection portion
- 5.4: lower surface
- 5.5: upper portion
- 10: household or kitchen appliance

- d: distance
- t: thickness

## Claims

1. Screw connection comprising a structural element (2) comprising a screw hole (2.1), a metal sheet (3) comprising a through hole (3.1) and a screw (4) comprising a thread, Z the structural element (2) and the metal sheet (3) being adapted to be connected by screwing the screw (4) through the through hole (3.1) of the metal sheet (3) into the screw hole (2.1) of the structural element (2), wherein the metal sheet (3) comprises an embossment (5), said embossment (5) at least partially surrounding the through hole (3.1) in order to increase the distance (d) between an upper surface of the metal sheet (3) and the screw hole (2.1) provided in the structural element (2), wherein the embossment (5) comprises an upper portion (5.5) comprising a contact surface (5.1), the screw head (4.1) of the screw (4) being adapted to rest against said contact surface (5.1) and the embossment (5) comprises a support portion (5.2) protruding from the upper portion (5.5) downwardly towards the structural element (2), the support portion (5.2) at least partially resting at the structural element (2) and at least partially radially confining the through hole (3.1), **characterized in that** the screw (4) passes the through hole without any engagement of the thread in the side wall limiting the through hole (3.1) in radial direction.

2. Screw connection according to claim 1, wherein the embossment (5) is obtained by partial metal forming or deep drawing of the metal sheet (3).

3. Screw connection according to claim 1 or 2, wherein the support portion (5.2) is formed by a ring-shaped rim.

4. Screw connection according to anyone of the preceding claims, wherein the support portion (5.2) protrudes perpendicular from the upper portion (5.5).

5. Screw connection according to any of the preceeding claims, wherein the support portion (5.2) protrudes downwardly and comprises a free end (5.2.1) that is oriented to abut essentially perpendicularly on the structural element (2), in particular wherein the support portion (5.2) protrudes downwardly from said upper portion (5.5).

6. Screw connection according to anyone of the preceding claims, wherein the embossing (5) comprises an annular, cup-like shape.

7. Screw connection according to anyone of the preceding claims, wherein the metal sheet (3) comprises a wall thickness (t) below 0.5mm.

8. Screw connection according to anyone of the preceding claims, wherein the structural element (2) is at least partially formed by a metal sheet.

9. Screw connection according to anyone of the preceding claims, wherein the screw (4) is a self-tapping screw.

10. Household or kitchen appliance comprising a screw connection (1) according to anyone of the preceding claims.

## Patentansprüche

1. Schraubverbindung, umfassend ein Strukturelement (2), umfassend ein Schraubenloch (2.1), ein Metallblech (3), umfassend eine Durchgangsbohrung, (3.1) und eine Schraube (4), umfassend ein Gewinde,
wobei das Strukturelement (2) und das Metallblech (3) dazu angepasst sind, durch Einschrauben der Schraube (4) durch die Durchgangsbohrung (3.1) des Metallblechs (3) in das Schraubenloch (2.1) des Strukturelements (2) verbunden zu werden, wobei das Metallblech (3) eine Erhöhung (5) umfasst, wobei die Erhöhung (5) die Durchgangsbohrung (3.1) zumindest teilweise umgibt, um den Abstand (d) zwischen einer oberen Oberfläche des Metallblechs (3) und dem in dem Strukturelement (2) bereitgestellten Schraubenloch (2.1) zu vergrößern, wobei die Erhöhung (5) einen oberen Teil (5.5), umfassend eine Kontaktoberfläche (5.1), umfasst, wobei der Schraubenkopf (4.1) der Schraube (4) dazu angepasst ist, an der Kontaktoberfläche (5.1) anzuliegen, und wobei die Erhöhung (5) einen Stützteil (5.2) umfasst, der aus dem oberen Teil (5.5) nach unten in Richtung des Strukturelements (2) herausragt, wobei der Stützteil (5.2) zumindest teilweise am Strukturelement (2) anliegt und die Durchgangsbohrung (3.1) zumindest teilweise radial einschließt,
**dadurch gekennzeichnet, dass** die Schraube (4) die Durchgangsbohrung ohne jeden Eingriff des Gewindes in die Seitenwand, die die Durchgangsbohrung (3.1) in radialer Richtung begrenzt, passiert.

2. Schraubverbindung nach Anspruch 1, wobei die Erhöhung (5) durch partielles Metallformen oder Tiefziehen des Metallblechs (3) erhalten wird.

3. Schraubverbindung nach Anspruch 1 oder 2, wobei der Stützteil (5.2) durch einen ringförmigen Rand gebildet wird.

4. Schraubverbindung nach einem der vorhergehenden Ansprüche, wobei der Stützteil (5.2) senkrecht aus dem oberen Teil (5.5) herausragt.

5. Schraubverbindung nach einem der vorhergehenden Ansprüche, wobei der Stützteil (5.2) nach unten herausragt und ein freies Ende (5.2.1) umfasst, das so ausgerichtet ist, um im Wesentlichen senkrecht am Strukturelement (2) anzuliegen, wobei insbesondere der Stützteil (5.2) aus dem oberen Teil (5.5) nach unten herausragt.

6. Schraubverbindung nach einem der vorhergehenden Ansprüche, wobei die Erhöhung (5) eine ringförmige, becherartige Form umfasst.

7. Schraubverbindung nach einem der vorhergehenden Ansprüche, wobei das Metallblech (3) eine Wanddicke (t) unter 0,5 mm umfasst.

8. Schraubverbindung nach einem der vorhergehenden Ansprüche, wobei das Strukturelement (2) zumindest teilweise durch ein Metallblech gebildet wird.

9. Schraubverbindung nach einem der vorhergehenden Ansprüche, wobei die Schraube (4) eine selbstschneidende Schraube ist.

10. Haushalt- oder Küchengerät, umfassend eine Schraubverbindung (1) nach einem der vorhergehenden Ansprüche.

## Revendications

1. Raccord à vis comprenant un élément structurel (2) comprenant un trou de vis (2.1), une feuille métallique (3) comprenant un trou traversant (3.1) et une vis (4) comprenant un filet,
l'élément structurel (2) et la feuille métallique (3) étant conçus pour être reliés en vissant la vis (4) à travers le trou traversant (3.1) de la feuille métallique (3) dans le trou de vis (2.1) de l'élément structurel (2), la feuille métallique (3) comprenant un bossage (5), ledit bossage (5) entourant au moins partiellement le trou traversant (3.1) afin d'augmenter la distance (d) entre une surface supérieure de la feuille métallique (3) et le trou de vis (2.1) fourni dans l'élément structurel (2), le bossage (5) comprenant une partie supérieure (5.5) comprenant une surface de contact (5.1), la tête de vis (4.1) de la vis (4) étant conçue pour reposer contre ladite surface de contact (5.1) et le bossage (5) comprenant une partie de support (5.2) faisant saillie de la partie supérieure (5.5) vers le bas en direction de l'élément structurel (2), la partie de support (5.2) reposant au moins partiellement sur l'élément structurel (2) et confinant au moins partiellement radialement le trou traversant (3.1), **caractérisé en ce que** la vis (4) traverse le trou traversant sans aucune mise en prise du filet dans la paroi latérale limitant le trou traversant (3.1) dans la direction radiale.

2. Raccord à vis selon la revendication 1, le bossage (5) étant obtenu par formage partiel du métal ou emboutissage de la feuille métallique (3).

3. Raccord à vis selon la revendication 1 ou 2, la partie de support (5.2) étant formée par un bord en forme d'anneau.

4. Raccord à vis selon l'une quelconque des revendications précédentes, la partie de support (5.2) faisant perpendiculairement saillie de la partie supérieure (5.5).

5. Raccord à vis selon l'une quelconque des revendications précédentes, la partie de support (5.2) faisant saillie vers le bas et comprenant une extrémité libre (5.2.1) qui est orientée pour venir en butée essentiellement perpendiculairement sur l'élément structurel (2), en particulier la partie de support (5.2) faisant saillie vers le bas depuis ladite partie supérieure (5.5).

6. Raccord à vis selon l'une quelconque des revendications précédentes, le bossage (5) comprenant une forme annulaire en forme de coupe.

7. Raccord à vis selon l'une quelconque des revendications précédentes, la feuille métallique (3) comprenant une épaisseur de paroi (t) inférieure à 0,5 mm.

8. Raccord à vis selon l'une quelconque des revendications précédentes, l'élément structurel (2) étant au moins partiellement formé par une feuille métallique.

9. Raccord à vis selon l'une quelconque des revendications précédentes, la vis (4) étant une vis autotaraudante.

10. Appareil électroménager ou de cuisine comprenant un raccord à vis (1) selon l'une quelconque des revendications précédentes.
